# DEMANDE DE BREVET EUROPEEN

(11) **EP 0 801 976 A1**
(43) Date de publication de la demande: **22.10.1997**
(21) Numéro de dépôt: 97400873.2
(22) Date de dépôt: 18.04.1997
(51) Int. Cl.: B01F 17/00

(54) **Procédé de préparation de suspensions aqueuses stables de particules, suspensions obtenues par ledit procédé et leurs utilisations**

(30) Priorité: 19.04.1996 FR 9604921
(71) Demandeur: Chalen Papier Europe Service, 60260 Lamorlaye (FR)
(72) Inventeur: Corby, Charles, 60260 Lamorlaye (FR); Cheradame, Hervé, 93340 Bourg la Reine (FR)
(74) Mandataire: Ores, Irène

(57) **Abrégé**

La présente Invention se rapporte à un procédé de préparation de suspensions aqueuses stables de particules ainsi qu'aux suspensions aqueuses stables obtenues par ledit procédé et à leurs utilisations.

Ce procédé comporte une étape de mise en suspension des particules dans une phase aqueuse et est caractérisé en ce qu'il comprend :
- préalablement à la mise en suspension des particules, la neutralisation des fonctions cationiques accessibles en surface desdites particules, et
- préalablement ou postérieurement à la mise en suspension des particules, la neutralisation des anions susceptibles d'être libérés au cours de cette mise en suspension des particules et de créer des liaisons interparticulaires.

Applications : toutes les industries dans lesquelles la préparation de suspensions aqueuses de particules représente une étape de la production et, notamment, l'industrie papetière, les industries des peintures et encres à base aqueuse et l'industrie de la céramique pour la fabrication des barbotines.

## Description

La présente Invention se rapporte à un procédé de préparation de suspensions aqueuses stables de particules et, notamment, de particules minérales, ainsi qu'aux suspensions aqueuses stables obtenues par ledit procédé et à leurs utilisations.

De nombreuses industries telles que l'industrie papetière, l'industrie des peintures, l'industrie des colles et des adhésifs, l'industrie des encres ou encore l'industrie de la céramique, utilisent des suspensions aqueuses, dénommées "slurries", barbotines ou dispersions, de particules minérales ou organiques finement divisées.

La mise en suspension aqueuse de telles particules repose classiquement sur la création, à un pH approprié et au moyen d'un système dispersant adapté, le plus souvent à base de polyacrylates, de charges négatives ou charges anioniques à la surface des particules convenablement mouillées, ce qui implique l'utilisation préalable d'un agent tensioactif propre à rendre les particules hydrophiles si celles-ci sont naturellement hydrophobes.

Ainsi par exemple, la mise en suspension aqueuse du talc de type chloriteux - qui contient du talc proprement dit (silicate de magnésium hydraté) et des feuillets de chlorite qui correspondent à un mélange de silicate de magnésium, de silicate d'aluminium et de traces de fer hydraté et dont la distribution est plus ou moins aléatoire - comprend un prétraitement des particules de talc par une solution aqueuse représentant en poids environ 10% du poids sec du talc et comprenant un agent tensioactif non ionique du type copolymère d'oxyde d'éthylène et d'oxyde de propylène, puis leur mise en suspension proprement dite, laquelle est réalisée à un pH compris entre 9 et 12 et en présence d'un dispersant tel qu'un polyacrylate, de manière à obtenir une suspension aqueuse contenant 60 à 65% de matière sèche.

Les suspensions aqueuses de particules ainsi obtenues présentent souvent l'inconvénient, notamment lorsqu'elles renferment des particules minérales ayant - comme dans le cas du talc de type chloriteux évoqué précédemment - une structure complexe, d'être instables, cette instabilité se traduisant par une augmentation de leur viscosité dans le temps et, en l'absence d'une agitation permanente ou périodique, par une sédimentation et une agglomération des particules qui conduisent à la formation d'un surnageant et d'un dépôt compact, lequel devient de plus en plus difficile à redisperser.

La présente Invention s'est, par conséquent, fixée pour but l'obtention de suspensions aqueuses de particules qui, quelles que soient l'origine (minérale ou organique), la composition chimique, la structure et la morphologie des particules, présentent une stabilité propre à leur conférer un comportement au vieillissement satisfaisant avec, notamment, un maintien de leur niveau de viscosité initiale et de leur homogénéité, même lorsque la teneur en matière sèche de ces suspensions est élevée (supérieure à 60% selon le type des particules) et ce, à un coût qui soit compatible avec les impératifs industriels.

Ce but est atteint selon la présente Invention par un procédé de préparation d'une suspension aqueuse stable de particules comportant une étape de mise en suspension des particules dans une phase aqueuse, caractérisé en ce qu'il comprend :
- préalablement à la mise en suspension des particules, la neutralisation des fonctions cationiques accessibles en surface desdites particules, et
- préalablement ou postérieurement à la mise en suspension des particules, la neutralisation des anions susceptibles d'être libérés au cours de cette mise en suspension et de créer des liaisons interparticulaires.

Au sens de la présente Invention, on entend par fonctions cationiques accessibles en surface, les fonctions cationiques des particules qui sont susceptibles d'être activées lors de la mise en suspension aqueuse de ces particules et d'interagir alors avec les fonctions anioniques présentes dans ladite suspension en formant avec celles-ci des liaisons interparticulaires.

Les Inventeurs ont, en effet, découvert que les systèmes auxiliaires de mise en suspension de l'art antérieur (dispersants et tensioactifs éventuels), outre d'avoir un rôle élémentaire de vecteurs de charges, complexent les cations superficiels - c'est-à-dire les cations sis à la surface des particules ou à proximité (dans des pores par exemple) et susceptibles d'entrer en contact direct avec la phase aqueuse au moment de la mise en suspension - mais le plus souvent seulement de manière partielle, entraînant secondairement la libération d'anions susceptibles de donner lieu à la formation de liaisons interparticulaires qui sont responsables, au moins pour une large part, des phénomènes de sédimentation et d'agglomération des particules. Ils ont en outre constaté que, de manière surprenante, une neutralisation aussi complète que possible de ces ions permet d'éviter ces phénomènes et, partant, d'obtenir des suspensions aqueuses stables.

Selon un mode de mise en oeuvre préféré du procédé conforme à l'Invention, pour la neutralisation des fonctions cationiques accessibles en surface des particules, on imprègne lesdites particules d'un composé fortement nucléophile.

Selon une disposition préférée de ce mode de mise en oeuvre, le composé fortement nucléophile est un ester phosphorique ou un ester phosphonique choisi dans le groupe qui comprend les esters alkyl-, aryl-, alkylaryl-, alkyléther-, aryléther- et alkylaryléther-phosphoriques acides, les esters alkyl-, aryl-, alkylaryl-, alkyléther-, aryléther- et alkylaryléther-phosphoniques acides, ainsi que les sels de ces esters et, de préférence, parmi le groupe comprenant les esters alkylpolyglycoléther- et alkylarylpolyglycoléther-phosphoriques acides et les esters alkylpolyglycoléther- et alkylarylpolyglycoléther-phosphoniques acides.

Selon une autre disposition préférée de ce mode de mise en oeuvre, le composé fortement nucléophile est un monoester ortho-, iso- ou téré-phtalique, éventuellement substitué sur le noyau, choisi parmi le groupe comprenant les monoesters alkyl-, aryl-, alkylaryl-, alkyléther-, aryléther- et alkylaryléther-benzène 1-2, 1-3 ou 1-4 carboxyliques acides et leurs sels. Ce monoester est avantageusement choisi parmi le groupe comprenant les monoesters alkylpolyglycoléther- et alkylarylpolyglycoléther-phtaliques acides.

Dans tous les cas, on utilise de préférence une dose d'ester phosphorique, d'ester phosphonique ou de monoester phtalique, par exemple en solution, dispersion ou émulsion aqueuse, comprise en poids entre 0,1 et 2,5% du poids des particules sèches. La quantité de solution, dispersion ou émulsion aqueuse utilisée est, quant à elle, choisie en fonction du type des particules à traiter. Elle est généralement comprise entre 5 et 35% en poids du poids sec desdites particules et peut être ajoutée à celles-ci en une ou plusieurs fois.

De manière avantageuse, ledit composé fortement nucléophile est préalablement mélangé à un solvant hydromiscible tel que l'alcool isopropylique, le 4 hydroxy- 4 méthyl- 2 pentanone (diacétone-alcool), un glycol du type dipropylène-glycol ou un ester méthylique du dipropylène-glycol, ou à un mélange de tels solvants. Les Inventeurs ont, en effet, constaté que, de manière étonnante, la présence d'un solvant ou d'un mélange de solvants de ce type permet une meilleure répartition dudit composé nucléophile autour des particules et accélère, de façon notable, la neutralisation de leurs fonctions cationiques accessibles en surface.

Selon un autre de mise en oeuvre préféré du procédé conforme à l'Invention, pour la neutralisation des anions susceptibles d'être libérés au cours de la mise en suspension des particules, on utilise un sel métallique soluble capable de former avec lesdits anions un sel métallique insoluble.

Dans le cas de minéraux renfermant éventuellement des fonctions acides siliciques ou humiques (talc, argiles kaoliniques, ...), l'utilisation de chlorures métalliques du type chlorure de baryum ou chlorure de zinc aptes à neutraliser ces acides par la formation de précipités de silicates ou humates métalliques, s'est révélée particulièrement avantageuse.

De manière préférée, le sel métallique est utilisé à une dose comprise en poids entre 0,0005 et 0,2% du poids des particules sèches.

L'action neutralisante du sel métallique soluble sur les anions peut avantageusement être renforcée par l'utilisation conjointe d'un sel hydrosoluble d'ammonium quaternaire. Ce dernier, qui peut être par exemple un bromure ou un chlorure de tétrabutylammonium, est également utilisé de préférence à une dose comprise en poids entre 0,0005 et 0,2% du poids des particules sèches.

Conformément à l'Invention, la neutralisation des anions peut être réalisée préalablement ou postérieurement à la mise en suspension des particules. Dans le premier cas, elle est effectuée en imprégnant les particules de sel métallique et, le cas échéant, de sel hydrosoluble d'ammonium quaternaire, ou d'une solution aqueuse de ce (s) sel(s). Cette imprégnation peut éventuellement être réalisée simultanément à l'imprégnation des particules par le composé fortement nucléophile, en utilisant un mélange de ce composé et de ce(s) sel(s). Dans le second cas, le sel métallique et, le cas échéant, le sel hydrosoluble d'ammonium quaternaire, sont ajoutés à la suspension de particules, par exemple sous la forme d'une solution aqueuse.

Selon encore un autre mode de mise en oeuvre préféré du procédé conforme à l'Invention, la mise en suspension des particules dans la phase aqueuse est réalisée en présence d'un agent dispersant et à un pH approprié. L'agent dispersant peut être par exemple un polyacrylate, de préférence un polyacrylate de sodium homo- ou copolymère, ou un sel d'un acide polycarboxylique tel qu'un polycarboxylate de sodium homo- ou copolymère, et est utilisé aux doses classiquement employées dans l'art antérieur pour la réalisation de suspensions aqueuses de particules (généralement, entre 0,1 et 2 % en poids du poids des particules sèches).

Complémentairement, l'Invention prévoit, préalablement à la mise en suspension des particules, une étape additionnelle consistant à supprimer l'hydrophobie des particules lorsque celles-ci sont naturellement hydrophobes, comme c'est le cas par exemple des particules de talc ou encore de certaines argiles riches en composés humiques, et que leur hydrophobie n'a pas été suffisamment éliminée lors de la neutralisation de leurs fonctions cationiques libres. Cette étape peut être effectuée après que les fonctions cationiques accessibles en surface des particules aient été neutralisées. En variante, elle peut être effectuée simultanément avec cette neutralisation.

Dans tous les cas, la suppression de l'hydrophobie est avantageusement réalisée en imprégnant les particules d'un agent tensioactif non ionique. Cet agent tensioactif peut être par exemple un copolymère bloc d'oxyde d'éthylène et d'oxyde de propylène ou encore un dérivé oxyéthyléné d'acide gras et est utilisé, par exemple en solution aqueuse, aux doses habituellement employées dans l'art antérieur pour modifier l'affinité des particules vis-à-vis de l'eau (généralement, entre 0,15 et 1,5 % en poids du poids des particules sèches).

L'effet de l'agent tensioactif non ionique sur l'hydrophobie des particules peut avantageusement être renforcé en imprégnant les particules d'un polyacide-alcool conjointement avec ledit agent tensioactif non ionique. Ce polyacide-alcool, qui peut être par exemple de l'acide citrique, est de préférence utilisé à une dose comprise en poids entre 0,05 et 1% du poids des particules sèches.

Selon encore un autre mode de mise en oeuvre préféré du procédé conforme à l'Invention, celui-ci comprend de plus, postérieurement à la mise en suspension des particules, une étape consistant à neutraliser les fonctions cationiques résiduelles susceptibles d'être gênantes. Au sens de la présente Invention, on entend par fonctions cationiques résiduelles susceptibles d'être gênantes, certaines fonctions cationiques, sises à la surface des particules ou présentes dans la phase aqueuse, qui n'ont pas été neutralisées par la neutralisation initiale et au cours de la mise en suspension et qui sont susceptibles de créer avec des anions, sis à la surface des particules ou présents dans la phase aqueuse, des liaisons interparticulaires.

Selon une disposition préférée de ce mode de mise en oeuvre, on utilise, pour cette neutralisation, un agent capable d'adsorber ces fonctions cationiques du type zéolites ou un agent complexant des cations du type polymères d'oxyde d'éthylène, éthers couronnes ou cryptands.

De manière particulièrement avantageuse, ledit agent est utilisé, par exemple sous forme d'une suspension aqueuse, à une dose comprise en poids entre 0,01 et 2% du poids des particules sèches.

Selon un mode de mise en oeuvre particulièrement préféré du procédé conforme à l'Invention, celui-ci comprend successivement les étapes suivantes :
a) la neutralisation des fonctions cationiques accessibles en surface des particules,
b) la mise en suspension des particules dans la phase aqueuse, et
c) la neutralisation des anions susceptibles d'être libérés au cours de ladite mise en suspension et de créer des liaisons particulaires.

Selon un autre mode de mise en oeuvre particulièrement préféré du procédé conforme à l'Invention, celui-ci comprend successivement les étapes suivantes :
a) la neutralisation des fonctions cationiques accessibles en surface des particules,
b) la suppression de l'hydrophobie des particules, si nécessaire,
c) la mise en suspension desdites particules dans la phase aqueuse,
d) la neutralisation des anions susceptibles d'être libérés au cours de ladite mise en suspension et de créer des liaisons interparticulaires, et
e) la neutralisation des fonctions cationiques résiduelles susceptibles d'être gênantes,
les étapes a) et b) pouvant être réalisées simultanément.

Quel que soit le mode de mise en oeuvre du procédé conforme à l'Invention, cette dernière prévoit, complémentairement, entre la mise en suspension des particules et l'étape qui la précède, un temps de mûrissement propre à obtenir une efficacité optimale du ou des traitements appliqués aux particules préalablement à leur mise en suspension. Ce temps de mûrissement est choisi en fonction de l'homogénéisation obtenue par les traitements précédents et varie de quelques minutes à quelques jours.

Le procédé conforme à l'Invention permet, par rapport aux procédés de préparation de suspensions aqueuses de particules connus dans l'art antérieur, d'obtenir facilement et à faible coût, des suspensions aqueuses stables, cette stabilité se traduisant notamment par une faible variation de leur niveau de viscosité dans le temps et un maintien de leur homogénéité et ce, en l'absence de toute agitation.

Si ce procédé s'est révélé particulièrement avantageux pour la fabrication de slurries de minéraux lamellaires tels que les talcs, les kaolins, les micas ou les argiles kaoliniques, il peut, d'une manière générale, être mis en oeuvre pour la préparation de toute suspension aqueuse de particules, minérales ou organiques (dispersions de polymères par exemple) susceptibles de libérer, lorsqu'elles sont en phase aqueuse, des cations et des anions propres à perturber, par la formation de liaisons interparticulaires, la mise en suspension de ces particules.

Il présente donc un grand intérêt et de nombreuses applications dans toutes les industries dans lesquelles la préparation de suspensions aqueuses de particules représente une étape de la production : l'industrie papetière, notamment pour la préparation des sauces de couchage, les industries des peintures, des colles et adhésifs ou encore des encres à base aqueuse, l'industrie de la céramique pour la fabrication des barbotines.

La présente Invention a, également, pour objet des suspensions aqueuses stables de particules, caractérisées en ce qu'elles sont susceptibles d'être obtenues par le procédé conforme à l'Invention.

La stabilité d'une suspension aqueuse de particules peut, d'une manière générale, s'apprécier par deux critères :
- un premier critère qui correspond à la proportion entre le volume de surnageant qui se forme lorsque la suspension est laissée à décanter - c'est-à-dire lorsqu'elle est laissée au repos sans agitation - pendant un temps déterminé, et son volume total (on définit ainsi un pourcentage de surnageant) ; et,
- un deuxième critère qui correspond à la facilité avec laquelle il est possible, au terme de cette décantation, de "redisperser" par une simple agitation manuelle, les particules ayant sédimenté de manière à rendre à ladite suspension une parfaite homogénéité.

Ainsi, on considère qu'une suspension aqueuse de particules est d'autant plus stable que le pourcentage de surnageant qui se forme, pour une durée de décantation déterminée, est plus faible et que, par ailleurs, la redispersion des particules par une agitation manuelle est aisée à réaliser.

A titre d'exemple, des suspensions aqueuses stables de particules minérales (kaolins, argiles kaoliniques, talcs, micas, ...) préparées conformément à l'Invention et renfermant entre 60 et 65% en poids de particules d'un diamètre moyen (D50) inférieur à 5 µm, présentent des pourcentages de surnageant qui sont inférieurs à 5% au terme de 24 heures de décantation et inférieurs à 10% au terme de 7 jours de décantation.

Par comparaison, des suspensions aqueuses minérales présentant une teneur pondérale en particules et une granulométrie comparables, mais préparées conformément à l'art antérieur, montrent des pourcentages de surnageant qui sont nettement supérieurs (par exemple, deux fois plus élevés) dès 24 heures de décantation.

Par ailleurs, après 7 jours de décantation, il est facile, voire même très facile, de redisperser les particules par une simple agitation manuelle dans le cas de suspensions aqueuses stables préparées conformément à l'Invention, alors qu'il est généralement très difficile, voire même impossible, de redisperser les particules de suspensions aqueuses préparées conformément à l'art antérieur.

La présente Invention a, encore, pour objet un procédé de préparation d'un agglomérat de particules, caractérisé en ce qu'il comprend :
- la préparation d'une suspension aqueuse stable de ces particules par le procédé de préparation d'une suspension aqueuse stable de particules conforme à l'Invention, et
- le séchage de la suspension ainsi préparée de manière à obtenir un agglomérat desdites particules.

Les Inventeurs ont, en effet, également constaté qu'en soumettant des suspensions aqueuses stables de particules préparées conformément à l'Invention à un séchage, on obtient des agglomérats de particules qui, de manière surprenante, peuvent être remis en suspension dans de l'eau pure très facilement et très rapidement, sans nécessiter de cisaillement important, ni d'additif particulier hormis éventuellement l'ajout d'une faible quantité d'un agent antimousse lorsque l'eau dans laquelle est effectuée la dispersion de ces agglomérats est particulièrement douce.

Au surplus, les suspensions aqueuses résultant de la remise en suspension de ces agglomérats ont étonnamment une stabilité tout à fait comparable à celle des suspensions aqueuses à partir desquelles ils sont obtenus.

L'opération de séchage nécessaire à l'obtention d'un tel agglomérat peut être réalisée par toutes les techniques classiquement employées dans l'art antérieur pour éliminer partiellement ou totalement l'eau présente dans une suspension particulaire, pour autant qu'elles n'exposent pas les particules à des températures trop élevées. Ainsi, par exemple, elle peut être réalisée par atomisation, par écaillage ou encore par séchage en four tunnel après filtre-pressage et berlingotage, en utilisant des températures comprises entre environ 50°C et environ 80°C. Il est possible d'obtenir de la sorte des agglomérats de particules qui se présentent, selon le cas, sous la forme de poudres, d'écailles ou de granulés et dont la teneur en eau représente en poids moins de 20% et, avantageusement, entre 2,5 et 15% du poids total de ces agglomérats.

La présente Invention a, de plus, pour objet des agglomérats de particules, caractérisés en ce qu'ils sont susceptibles d'être obtenus par le procédé de préparation d'un agglomérat de particules tel que précédemment défini.

De tels agglomérats présentent un grand intérêt dans la mesure où d'une part, de par leur volume et leur masse réduits, leur manutention, leur stockage et leur transport sont moins coûteux que ceux des suspensions aqueuses correspondantes et, d'autre part, leur mode d'utilisation est très simple puisqu'il suffit, pour obtenir des suspensions aqueuses stables à partir de ces agglomérats, de les mettre au contact, par exemple dans la cuve d'un mélangeur, d'une quantité d'eau appropriée, éventuellement additionnée d'un agent antimousse, pendant environ 5 à 20 minutes selon la granulométrie des particules, puis de soumettre l'ensemble à une agitation, sous cisaillement modéré, le temps nécessaire à l'obtention d'une homogénéisation. En général, une agitation de 10 minutes au maximum suffit pour obtenir des suspensions parfaitement homogènes.

La présente Invention a, par ailleurs, pour objet l'utilisation d'une suspension aqueuse stable ou d'un agglomérat de particules conformes à l'Invention dans l'industrie papetière pour la fabrication des sauces de couchage.

La présente Invention a, encore, pour objet l'utilisation d'une suspension aqueuse stable ou d'un agglomérat de particules conformes à l'Invention pour la fabrication des peintures et encres à base aqueuse.

La présente Invention a, en outre, pour objet l'utilisation d'une suspension aqueuse stable ou d'un agglomérat de particules conformes à l'Invention pour la fabrication des barbotines céramiques.

La présente Invention sera mieux comprise à l'aide du complément de description qui suit et qui se réfère à des exemples de mise en oeuvre du procédé conforme à l'Invention.

Il va de soi, toutefois, que ces exemples sont donnés uniquement à titre d'illustrations de l'objet de l'Invention dont ils ne constituent en aucune manière une limitation.

### EXEMPLE 1 : PREPARATION D'UNE SUSPENSION AQUEUSE STABLE D'ARGILE KAOLINIQUE

Conformément à l'Invention, on prépare une suspension aqueuse stable comprenant 62,5% en poids de matière sèche d'argile kaolinique selon le procédé suivant :

### * Neutralisation des fonctions cationiques accessibles en surface des particules d'argile kaolinique :

On mélange l'argile en bâtonnets avec une solution aqueuse représentant 15% en poids du poids sec de l'argile et comprenant 3,7% en poids d'ester alkylpolyglycoléther-phosphorique acide tel que commercialisé par la Société ZSCHIMMER & SCHWARZ FRANCE sous la référence ARCAFOS S (soit une dose de produit actif représentant en poids 0,5% du poids sec des particules d'argile) et ce, jusqu'à obtenir une imprégnation homogène des particules par ladite solution.

### * Mise en suspension aqueuse des particules d'argile kaolinique :

Après un temps de mûrissement des particules qui est avantageusement de 48 heures, on procède à la mise en suspension des particules d'argile en ajoutant la quantité d'eau nécessaire pour obtenir une suspension aqueuse à 62,5% de matière sèche, en présence de 0,15% - en poids rapporté au poids sec des particules d'argile - de polyacrylate de sodium tel que commercialisé par la Société COATEX SA sous la référence COATEX Gx Na, et de carbonate de sodium pour amener le pH de la suspension à une valeur d'environ 8,5 et ce, sous un cisaillement convenable, jusqu'à obtenir une suspension homogène.

### * Neutralisation des anions :

Cette neutralisation est effectuée, à l'issue de la mise en suspension aqueuse des particules d'argile, en introduisant dans ladite suspension 0,5% - en poids rapporté au poids sec des particules - d'une solution aqueuse à 1% de chlorure de baryum (soit une dose de sel représentant 0,005% du poids sec des particules d'argile).

### EXEMPLE 2 : PREPARATION D'UNE SUSPENSION AQUEUSE STABLE DE TALC DE TYPE CHLORITEUX

On prépare, conformément à l'Invention, une suspension aqueuse stable renfermant 63,5% en poids de matière sèche de talc de type chloriteux par un procédé comprenant les étapes suivantes :

### * Neutralisation des fonctions cationiques accessibles en surface des particules de talc :

On mélange le talc avec une solution aqueuse représentant 10% en poids de son poids sec et comprenant 5% en poids d'ester alkylpolyglycoléther phosphorique acide comme utilisé dans l'exemple 1 (soit une dose de produit actif représentant en poids 0,5% du poids sec des particules) et ce, jusqu'à obtenir une imprégnation homogène des particules par ladite solution.

### * Suppression de l'hydrophobie des particules de talc :

Les particules de talc de type chloriteux étant hydrophobes, il convient, préalablement à leur mise en suspension, de les rendre hydrophiles, ce qui est obtenu en mélangeant ces particules avec une solution aqueuse représentant 10% en poids du poids sec desdites particules et comprenant 5% en poids d'un copolymère bloc d'oxyde d'éthylène et d'oxyde de propylène à 20% d'oxyde d'éthylène tel que commercialisé par la Société BASF sous la référence LUMITEN PT (soit une dose de produit actif représentant en poids 0,5% du poids sec des particules).

Là encore, le mélange est poursuivi jusqu'à obtenir une imprégnation homogène des particules par ladite solution.

### * Mise en suspension aqueuse des particules de talc :

Elle est réalisée, après un temps de mûrissement qui est avantageusement de 36 heures, en ajoutant au talc la quantité d'eau nécessaire pour obtenir une suspension aqueuse à 63,5% de matière sèche, en présence de 0,3% - en poids rapporté au poids du talc sec - de polyacrylate de sodium du même type que celui utilisé dans l'exemple 1, et de soude pour amener le pH de la suspension à une valeur d'environ 11,5.

### * Neutralisation des anions :

Elle est réalisée en introduisant dans la suspension aqueuse obtenue à l'étape précédente 0,5% en poids d'une solution aqueuse à 1% de chlorure de baryum.

### * Neutralisation des fonctions cationiques gênantes résiduelles :

Elle est obtenue en ajoutant à la suspension aqueuse de talc, 2% - en poids rapporté au poids sec des particules - d'une solution aqueuse à 5% de zéolite A de D50 égal à 3,5 µm telle que commercialisée par la Société DEGUSSA sous la référence WESSALITH P ou S (soit une dose de zéolite représentant en poids 0,1% du poids sec des particules).

### ETUDE QUALITATIVE DES SUSPENSIONS AQUEUSES CONFORMES A L'INVENTION

Les suspensions aqueuses préparées conformément aux exemples 1 et 2 et ci-après dénommées suspension 1 (argile kaolinique) et suspension 2 (talc chloriteux) ont fait l'objet d'une étude comparative avec des suspensions aqueuses témoins, ci-après témoin 1 et témoin 2, présentant la même composition particulaire qu'elles (même minéral, même granulométrie, même teneur pondérale en matière sèche), mais préparées conformément à l'art antérieur (c'est-à-dire dont les particules ont été mises en suspension, à un pH de 8,5 pour la suspension d'argile kaolinique et de 10 pour la suspension de talc, en présence d'un dispersant et, dans le cas du talc, après un prétraitement par un agent tensioactif non ionique).

Cette étude comparative a été réalisée au moyen de deux tests :
* un premier test de "décantation" consistant à laisser les suspensions décanter sans agitation, dans un récipient gradué, et à mesurer, au terme de 24 heures, 3 jours, 8 jours et 15 jours de décantation, la hauteur du surnageant s'étant éventuellement formé ; les résultats de ce test sont exprimés en pourcentages de surnageant calculés selon la formule : (hauteur du surnageant/ hauteur totale de la suspension) x 100 ;
* un deuxième test de "redispersabilité" consistant à apprécier la facilité éprouvée à redisperser, par une agitation, les particules des suspensions ayant ainsi décanté ; les résultats de ce test sont exprimés au moyen d'une échelle de valeurs ayant la signification suivante :
   0 : dépôt très compact, redispersabilité impossible
   1 : dépôt compact, redispersabilité très difficile
   2 : fort épaississement, redispersabilité difficile
   3 : épaississement sensible, redispersabilité assez difficile
   4 : léger épaississement, redispersabilité facile
   5 : aucun dépôt, redispersabilité très facile

Les résultats de cette étude comparative sont réunis dans le Tableau 1 ci-après.

**TABLEAU 1**

| | **Témoin 1** | **Suspension 1** | **Témoin 2** | **Suspension 2** |
|---|---|---|---|---|
| **Test de décantation** | | | | |
| 24 heures | 0 | 0 | 1 | 0 |
| 3 jours | 6,5 | 1 | 4,5 | 0 |
| 8 jours | 13 | 3 | 9 | 2,5 |
| 15 jours | 18,5 | 7 | 14,5 | 6 |

| **Test de redispersabilité** | | | | |
|---|---|---|---|---|
| 24 heures | 4 | 5 | 4 | 5 |
| 3 jours | 3 | 5 | 3 | 5 |
| 8 jours | 2 | 4,5 | 1 | 4,5 |
| 15 jours | 0,5 | 4 | 0,5 | 4 |

Ces résultats montrent que les suspensions aqueuses de particules préparées conformément à l'Invention présentent, en l'absence de toute agitation, une tendance notablement moindre à la sédimentation que les suspensions aqueuses de particules préparées selon l'art antérieur. De plus, il est extrêmement aisé, au terme d'une décantation de quinze jours, de leur rendre leur homogénéité initiale en les soumettant à une agitation alors que, dans le cas des suspensions préparées conformément à l'art antérieur, il se forme un dépôt très compact, extrêmement difficile, voire impossible à redisperser.

L'Invention ne se limite nullement à ceux de ses modes de mise en oeuvre, de réalisation et d'application qui viennent d'être décrits de façon plus explicite ; elle en embrasse au contraire toutes les variantes qui peuvent venir à l'esprit du technicien en la matière, sans s'écarter du cadre de la présente Invention.

Ainsi, par exemple, si l'Invention prévoit d'effectuer la mise en suspension des particules en phase aqueuse après les étapes consistant d'une part, à neutraliser les fonctions cationiques accessibles en surface de ces particules et, d'autre part, à supprimer leur hydrophobie, il est toutefois possible de mélanger, dès ces étapes, lesdites particules avec une partie de la quantité d'eau prévue pour réaliser cette mise en suspension. Cependant, dans ce cas, il convient que la quantité d'eau ajoutée au cours de ces deux étapes ne représente pas plus des 2/3 du volume d'eau initialement prévu pour réaliser la mise en suspension des particules.

Il est également possible d'ajouter aux suspensions, conformément à l'art antérieur, divers adjuvants tels que des agents antimousse, des biocides, des agents d'étalement, des colloïdes protecteurs ou encore des azurants optiques.

## Revendications

1. Procédé de préparation d'une suspension aqueuse stable de particules comportant une étape de mise en suspension des particules dans une phase aqueuse, caractérisé en ce qu'il comprend :
- préalablement à la mise en suspension des particules, la neutralisation des fonctions cationiques accessibles en surface desdites particules, et
- préalablement ou postérieurement à la mise en suspension des particules, la neutralisation des anions susceptibles d'être libérés au cours de cette mise en suspension et de créer des liaisons interparticulaires.

2. Procédé selon la Revendication 1, caractérisé en ce que, pour la neutralisation des fonctions cationiques accessibles en surface des particules, on imprègne lesdites particules d'un composé fortement nucléophile.

3. Procédé selon la Revendication 2, caractérisé en ce que ledit composé fortement nucléophile est un ester phosphorique ou un ester phosphonique choisi dans le groupe qui comprend les esters alkyl-, aryl-, alkylaryl-, alkyléther-, aryléther- et alkylaryléther-phosphoriques acides, les esters alkyl-, aryl-, alkylaryl-, alkyléther-, aryléther- et alkylaryléther-phosphoniques acides, ainsi que les sels de ces esters et, de préférence, parmi le groupe comprenant les esters alkylpolyglycoléther- et alkylarylpolyglycoléther-phosphoriques acides et les esters alkylpolyglycoléther-et alkylarylpolyglycoléther-phosphoniques acides.

4. Procédé selon la Revendication 2, caractérisé en ce que le composé fortement nucléophile est un monoester ortho-, iso- ou téré-phtalique, éventuellement substitué sur le noyau, choisi parmi le groupe comprenant les monoesters alkyl-, aryl-, alkylaryl-, alkyléther-, aryléther- et alkylaryléther-benzène 1-2, 1-3 ou 1-4 carboxyliques acides et leurs sels.

5. Procédé selon la Revendication 3 ou la Revendication 4, caractérisé en ce qu'on imprègne les particules d'une dose d'ester phosphorique, d'ester phosphonique ou de monoester phtalique comprise en poids entre 0,1 et 2,5% du poids des particules sèches.

6. Procédé selon l'une quelconque des Revendications 2 à 5, caractérisé en ce que le composé fortement nucléophile est préalablement mélangé à un solvant hydromiscible ou un mélange de solvants hydromiscibles.

7. Procédé selon l'une quelconque des Revendications précédentes, caractérisé en ce que, pour la neutralisation des anions susceptibles d'être libérés au cours de la mise en suspension des particules, on utilise un sel métallique soluble capable de former avec lesdits anions un sel métallique insoluble.

8. Procédé selon la Revendication 7, caractérisé en ce que ledit sel métallique soluble est un chlorure métallique choisi parmi le groupe comprenant le chlorure de baryum et le chlorure de zinc.

9. Procédé selon la Revendication 7 ou la Revendication 8, caractérisé en ce que ledit sel métallique soluble est utilisé à une dose comprise en poids entre 0,0005 et 0,2% du poids des particules sèches.

10. Procédé selon l'une quelconque des Revendications 7 à 9, caractérisé en ce que, pour la neutralisation des anions susceptibles d'être libérés au cours de la mise en suspension des particules, on utilise un sel hydrosoluble d'ammonium quaternaire conjointement avec le sel métallique soluble.

11. Procédé selon la Revendication 10, caractérisé en que ce que ledit sel hydrosoluble d'ammonium quaternaire est utilisé à une dose comprise en poids entre 0,0005 et 0,2% du poids des particules sèches.

12. Procédé selon l'une quelconque des Revendications précédentes, caractérisé en ce que la mise en suspension des particules dans la phase aqueuse est réalisée en présence d'un agent dispersant et à un pH approprié.

13. Procédé selon l'une quelconque des Revendications précédentes, caractérisé en ce qu'il comprend, préalablement à la mise en suspension des particules, une étape consistant à supprimer l'hydrophobie des particules.

14. Procédé selon la Revendication 13, caractérisé en ce que la neutralisation des fonctions cationiques accessibles en surface des particules et la suppression de l'hydrophobie de ces particules sont réalisées simultanément.

15. Procédé selon la Revendication 13 ou la Revendication 14, caractérisé en ce que, pour supprimer l'hydrophobie des particules, on imprègne lesdites particules d'un agent tensioactif non ionique.

16. Procédé selon la Revendication 15, caractérisé en ce que, pour supprimer l'hydrophobie des particules, on imprègne lesdites particules d'un polyacide-alcool conjointement avec ledit agent tensioactif non ionique.

17. Procédé selon la Revendication 16, caractérisé en ce que le polyacide-alcool est utilisé à une dose comprise en poids entre 0,05 et 1% du poids des particules sèches.

18. Procédé selon l'une quelconque des Revendications précédentes, caractérisé en ce qu'il comprend, de plus, postérieurement à la mise en suspension des particules, une étape consistant à neutraliser les fonctions cationiques résiduelles susceptible d'être gênantes.

19. Procédé selon la Revendication 18, caractérisé en ce que, pour la neutralisation des fonctions cationiques résiduelles susceptibles d'être gênantes, on utilise un agent propre à adsorber lesdites fonctions cationiques du type zéolites ou un agent complexant des cations du type polymères d'oxyde d'éthylène, éthers couronnes ou cryptands.

20. Procédé selon la Revendication 19, caractérisé en ce que ledit agent est utilisé à une dose comprise en poids entre 0,01 et 2% du poids des particules sèches.

21. Procédé selon l'une quelconque des Revendications 1 à 12, caractérisé en ce qu'il comprend successivement les étapes suivantes :
a) la neutralisation des fonctions cationiques accessibles en surface des particules,
b) la mise en suspension des particules dans la phase aqueuse, et
c) la neutralisation des anions susceptibles d'être libérés au cours de ladite mise en suspension et de créer des liaisons interparticulaires.

22. Procédé selon l'une quelconque des Revendications 1 à 20, caractérisé en ce qu'il comprend successivement les étapes suivantes :
a) la neutralisation des fonctions cationiques accessibles en surface des particules,
b) la suppression de l'hydrophobie des particules, si nécessaire,
c) la mise en suspension desdites particules dans la phase aqueuse,
d) la neutralisation des anions susceptibles d'être libérés au cours de ladite mise en suspension et de créer des liaisons interparticulaires, et
e) la neutralisation des fonctions cationiques résiduelles susceptibles d'être gênantes,
les étapes a) et b) pouvant être réalisées simultanément.

23. Procédé selon l'une quelconque des Revendications précédentes, caractérisé en ce qu'il comprend en outre un temps de mûrissement approprié entre la mise en suspension des particules et l'étape qui la précède.

24. Suspension aqueuse stable de particules, caractérisée en ce qu'elle est susceptible d'être obtenue par le procédé selon l'une quelconque des Revendications 1 à 23.

25. Procédé de préparation d'un agglomérat de particules, caractérisé en ce qu'il comprend :
- la préparation d'une suspension aqueuse stable de ces particules par le procédé de préparation d'une suspension aqueuse stable de particules selon l'une quelconque des Revendications 1 à 23, et
- le séchage de la suspension ainsi préparée de manière à obtenir un agglomérat desdites particules.

26. Agglomérat de particules, caractérisé en ce qu'il est susceptible d'être obtenu par le procédé selon la Revendication 25.

27. Utilisation d'une suspension aqueuse stable de particules selon la Revendication 24 ou d'un agglomérat de particules selon la Revendication 26 dans l'industrie papetière pour la fabrication des sauces de couchage.

28. Utilisation d'une suspension aqueuse stable de particules selon la Revendication 24 ou d'un agglomérat de particules selon la Revendication 26 pour la fabrication des peintures et encres à base aqueuse.

29. Utilisation d'une suspension aqueuse stable de particules selon la Revendication 24 ou d'un agglomérat de particules selon la Revendication 26 pour la fabrication des barbotines céramiques.
